# EUROPÄISCHE PATENTSCHRIFT

(11) **EP 4 189 761 B1**
(45) Veröffentlichungstag und Bekanntmachung des Hinweises auf die Patenterteilung: **30.08.2023**
(21) Anmeldenummer: 21718077.7
(22) Anmeldetag: 07.04.2021
(51) Int. Cl.: H01M 8/04082, H01M 8/0432, H01M 8/24, H01M 8/18

(54) **REDOX-FLOW BATTERIE MIT EINER MESSEINRICHTUNG**
REDOX FLOW BATTERY WITH A MEASURING DEVICE
BATTERIE À FLUX REDOX DOTÉE D'UN DISPOSITIF DE MESURE

(30) Priorität: 03.08.2020 DE 102020120428
(43) Veröffentlichungstag der Anmeldung: 07.06.2023
(73) Patentinhaber: Voith Patent GmbH, 89522 Heidenheim (DE)
(72) Erfinder: LÜTH, Thomas, 79104 Freiburg (DE); KRÜGER, Klaus, 73460 Hüttlingen (DE)
(74) Vertreter: Voith Patent GmbH - Patentabteilung
(86) Internationale Anmeldenummer: PCT/EP2021/058989
(87) Internationale Veröffentlichungsnummer: WO 2022/028743

(56) Entgegenhaltungen:
- EP-A1- 2 648 258
- WO-A1-90/03666
- WO-A1-2011/078774
- CN-A- 101 614 794

## Beschreibung

Die Erfindung betrifft eine Redox-Flow Batterie mit einer Messeinrichtung zur Bestimmung einer Elektrolyteigenschaft. Dabei handelt es sich insbesondere aber nicht ausschließlich um die Bestimmung eines Elektrodenpotentials. Die Batterie kann dabei allein oder als Teil eines Batterie-Systems betrieben werden. Ein solches Batterie-System besteht beispielsweise aus einer Serienschaltung von mehreren Redox-Flow Batterien (Batterie-String).

Eine Redox-Flow Batterie umfasst ein Zellanordnung, d.h. eine Anordnung von einer Vielzahl von Redox-Flow Zellen, und eine Tankeinrichtung zum Speichern von Elektrolyt mit wenigstens zwei Tanks, wobei ein erster Tank negativen Elektrolyt und ein zweiter Tank positiven Elektrolyt speichert. Während dem Betrieb der Batterie wird negativer und positiver Elektrolyt in zwei getrennten Kreisläufen durch die Zellen gepumpt. Dazu sind zwei Pumpenlaufräder, Mittel zum Antreiben der Pumpenlaufräder und entsprechende Verrohrungen vorgesehen. Zur Bestimmung des Ladezustandes (SoC - State of Charge) umfasst eine Redox-Flow Batterie eine Messeinrichtung zur Bestimmung der Leerlaufspannung (open circuit voltage - OCV). Dabei handelt es sich um eine elektrochemische Zelle mit Kammern für positiven und negativen Elektrolyten, welche von eine Membran separiert werden. In den Kammern sind die Elektroden angeordnet, an denen als Messgröße eine Spannung abgegriffen werden kann. Außerdem kann eine solche Redox-Flow Batterie weitere elektrochemische Zellen umfassen, die ähnlich wie die Zellen zur Bestimmung der Leerlaufspannung aufgebaut sind. Jedoch ist bei den weiteren Zellen eine der Kammern mit einem Referenz-Elektrolyten gefüllt, und die andere Kammer wird mit negativen oder positiven Elektrolyt gefüllt. Solche Zellen werden auch als Referenzzellen bezeichnet und dienen der Detektion einer Verschiebung im Elektrolyt der Batterie. Die WO 2018/237181 A1 offenbart eine Redox-Flow Batterie mit OCV- und Referenzzelle. Die WO 2012/020277 A1 offenbart eine Redox-Flow Batterie mit einer OCV-Zelle, wobei die WO 2012/020277 A1 Details zur Einbindung der OCV-Zelle in die Batterie offenbart.

Die Erfinder haben sich die Aufgabe gestellt eine Redox-Flow Batterie anzugeben, die einfacher aufgebaut ist, bzw. die flexibler ausgelegt werden kann, als herkömmliche Redox-Flow Batterien.

Die Aufgabe wird erfindungsgemäß durch eine Ausführung entsprechend dem unabhängigen Vorrichtungsanspruch gelöst. Weitere vorteilhafte Ausführungsformen der vorliegenden Erfindung finden sich in den Unteransprüchen.

Die erfindungsgemäßen Lösungen werden im Folgenden anhand von Figuren erläutert. Die Figuren zeigen im Einzelnen:
- Fig. 1: Redox-Flow Batterie
- Fig. 2: Messeinrichtungen einer Redox-Flow Batterie
- Fig. 3: Erfindungsgemäße Messzelle in einer ersten Ausführungsform
- Fig. 4: Erfindungsgemäße Messzelle in einer weiteren Ausführungsform
- Fig. 5: Erfindungsgemäße Messzelle in einer weiteren Ausführungsform

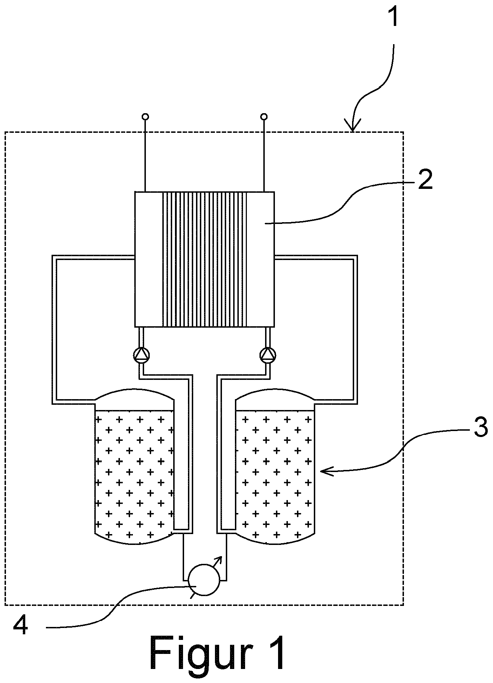

Figur 1 zeigt eine Redox-Flow Batterie, welche mit 1 bezeichnet ist. Die Batterie umfasst eine Zellanordnung, welche mit 2 bezeichnet ist, und eine Tankeinrichtung, welche mit 3 bezeichnet ist. Bei der Zellanordnung 2 handelt es sich um eine Anordnung von einer Vielzahl von Redox-Flow-Zellen, welche beliebig angeordnet sein können. Beispielsweise könnte es sich um einen einzelnen Zell-Stack, eine Serienschaltung von mehreren Stacks, eine Parallelschaltung von mehreren Stacks, oder um eine Kombination von Serien- und Parallelschaltung von mehreren Stacks handeln. Die Tankeinrichtung 3 dient zum Speichern des Elektrolyten und zur Versorgung der Zellanordnung 2 mit Elektrolyt. Dazu umfasst die Tankeinrichtung 3 wenigstens zwei Tanks für negativen und positiven Elektrolyt, ein Rohrsystem zur Verbindung der Tanks mit der Zellanordnung 2 und Pumpenlaufräder zum Fördern des Elektrolyten, um jeweils einen Elektrolytkreislauf zu bilden. Die Batterie 1 umfasst ferner eine Messeinrichtung zur Bestimmung der sogenannten Leerlaufspannung (open circuit voltage - OCV), welche mit 4 bezeichnet ist. Der OCV-Wert ist ein Maß für den Ladezustand des Batteriemoduls (SoC - State of Charge). Im Allgemeinen umfasst die Batterie 1 eine Messeinrichtung 4 zur Bestimmung einer Elektrolyteigenschaft. Figur 1 zeigt dabei die Anordnung der Messeinrichtung 4 innerhalb der Batterie in rein schematischer Form.

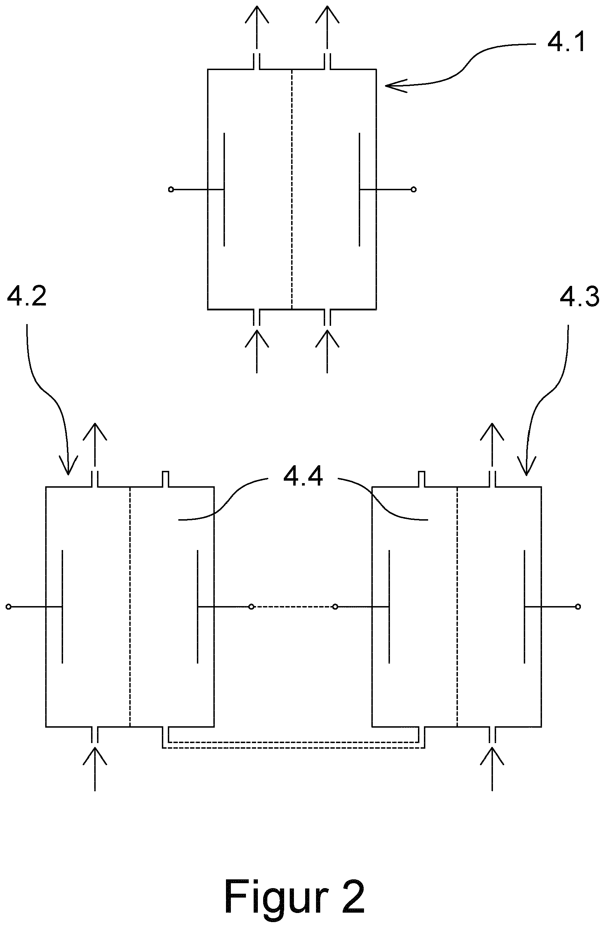

Figur 2 zeigt zwei Ausführungsformen für eine solche Messeinrichtung 4. Die im oberen Teil dargestellte Ausführungsform umfasst eine Messzelle, welche mit 4.1 bezeichnet ist. Die Messzelle 4.1 wir durch eine Membran oder einen Separator in zwei Kammern geteilt. In jeder Kammer ist jeweils eine Elektrode angeordnet. Zwischen den beiden Elektroden kann die Leerlaufspannung abgegriffen werden. Die Messzelle umfasst vier Anschlüsse, wobei je zwei Anschlüsse in jede der beiden Kammern münden. Eine Kammer ist zur Aufnahme von negativem Elektrolyt bestimmt, wobei ein Anschluss für die Zufuhr und ein Anschluss für die Abfuhr von negativem Elektrolyt bestimmt sind. Die andere Kammer ist zur Aufnahme von positivem Elektrolyt bestimmt, wobei ein Anschluss für die Zufuhr und ein Anschluss für die Abfuhr von positivem Elektrolyt bestimmt sind. Dies wird in Figur 2 durch die Pfeile angedeutet, welche den Zu- bzw. Abfluss von Elektrolyt anzeigen.

Die im unteren Teil von Figur 2 dargestellte Ausführungsform umfasst zwei Messzellen, welche als Referenzzellen ausgeführt und mit 4.2 und 4.3 bezeichnet sind. Jede der Messzellen ist durch eine Membran bzw. einen Separator in zwei Kammern geteilt und in jeder Kammer ist jeweils eine Elektrode angeordnet. Von jeder der Messzellen 4.2 und 4.3 ist je eine Kammer zur Aufnahme einer Referenzflüssigkeit oder einer Referenzsubstanz vorgesehen. Auf den letztgenannten Sonderfall wird weiter unten im Detail eingegangen. D.h. die folgenden Passagen beziehen sich auf Referenzzellen mit einer Referenzflüssigkeit. Dies ist jedoch nicht auf eine Flüssigkeit einschränkend zu verstehen. Diese Kammern sind mit 4.4 bezeichnet. Die Kammern 4.4 zur Aufnahme von Referenzflüssigkeit können geschlossen sein, d.h. dass die in der Figur gezeigten Anschlüsse verschlossen werden, nachdem die Referenzflüssigkeit eingefüllt worden ist. Die Kammern 4.4 können auch untereinander verbunden sein, wie durch die gestrichelte Leitung unten angedeutet wird. Es können auch Mittel vorgesehen sein, durch die von Zeit zu Zeit frische Referenzflüssigkeit in die Kammern 4.4 eingeführt wird, wobei die verbrauchte Referenzflüssigkeit aus den Kammern 4.4 herausgeführt wird. Die beiden übrigen Kammern haben je zwei Anschlüsse, wobei eine dieser Kammern zur Aufnahme von negativem Elektrolyt bestimmt ist, und wobei ein Anschluss für die Zufuhr und ein Anschluss für die Abfuhr von negativem Elektrolyt bestimmt sind. Die andere Kammer ist zur Aufnahme von positivem Elektrolyt bestimmt, wobei ein Anschluss für die Zufuhr und ein Anschluss für die Abfuhr von positivem Elektrolyt bestimmt sind. Die Elektroden der Kammern, welche für die Aufnahme der Referenzflüssigkeit bestimmt sind, können, wie in Figur 2 gestrichelt dargestellt, miteinander verbunden sein, so dass die Leerlaufspannung direkt zwischen den verbleibenden Elektroden abgegriffen werden kann. Alternativ kann die dargestellte Verbindung der mittleren Elektroden entfallen, und es kann je eine Teilspannung zwischen den zwei Elektroden von jeder Zelle abgegriffen werden. Die Leerlaufspannung ergibt sich dann aus der Summe der beiden Teilspannungen. Wenn die beiden Teilspannungen von vordefinierten Referenzwerten abweichen, kann aus den Abweichungen auf das Vorliegen einer Verschiebung im Elektrolyt der Batterie geschlossen werden. Eine solche Verschiebung kann durch Vanadium Oxidation, weitere chemische Nebenreaktionen sowie durch den "crossover" an den Membranen der Stacks verursacht werden. Die Möglichkeit der Detektion einer solchen Verschiebung macht die in Figur 2 unten dargestellte Ausführungsform besonders vorteilhaft.

Auch in einer Referenzzelle selbst kann es zu "crossover" kommen. Um diesen unerwünschten Effekt zu reduzieren, ist es vorteilhafte, wenn die Referenzflüssigkeit eine möglichst hohe Viskosität besitzt. Als Referenzflüssigkeit kann daher vorteilhaft ein sogenannter "gelled electrolyte" (d.h. ein gelierter Elektrolyt) verwendet werden, welcher in der WO 02/11227 A1 beschrieben wird. In Redox-Flow Batterien auf der Basis von Vanadium wird in der Regel V³⁺/V⁴⁺ Elektrolyt verwendet.

Eine weitere Ausführungsform einer Referenzzelle besteht darin, dass anstelle einer herkömmlichen Elektrode und einer Referenzflüssigkeit ein in der entsprechenden Kammer angeordneter Platindraht verwendet wird, welche in der Nähe der Membran bzw. des Separators angeordnet und während der Messung von einem Strom durchflossen ist. Neben Platin kann auch Silber-Silberchlorid als Material für einen solchen Draht verwendet werden.

Eine weitere Ausführungsform einer Referenzzelle beruht auf einem völlig anderen Messprinzip. Die Referenzzelle besteht dabei aus einer einzigen schmalen Kammer bzw. einem engen Raum. welcher von Elektrolyt durchströmt wird. Die Messung der Elektrolyteigenschaft erfolgt dann nicht elektrisch mit Hilfe einer Elektrode, sondern optisch, indem der Elektrolytfilm spektroskopisch untersucht wird. Näheres hierzu findet sich beispielsweise in "A review on the electrolyte imbalance in vanadium redox flow batteries" von Tossaporn Jirabovornwisut, Amornchai Arpornwichanop erschienen im International Journal of Hydrogen Energy 44 (2019) Seiten 24485-24509 ab dem Abschnitt "U-vis spectroscopic measurement" auf Seite 24497.

Alle Ausführungsformen haben gemeinsam, dass die Messeinrichtung 4 zur Bestimmung einer Elektrolyteigenschaft wenigstens eine Messzelle und wenigstens zwei Anschlüsse umfasst, wobei ein Anschluss für die Zufuhr von Elektrolyt und ein Anschluss für die Abfuhr von Elektrolyt vorgesehen ist. Dabei ist klar, dass die Anschlüsse ausgebildet sind, um die wenigsten eine Messzelle bzw. eine Kammer der Messzelle mit einem Elektrolyt-Durchfluss zu versorgen.

Wenn die Messeinrichtung 4 nur eine Messzelle zur Bestimmung der Leerlaufspannung umfasst, wie im oberen Teil von Figur 2 dargestellt, dann wird diese Messzelle im Folgenden auch als OCV-Zelle bezeichnet. Zwei Referenzzellen können gemeinsam eine OCV-Messeinrichtung bilden, wie im unteren Teil von Figur 2 angedeutet.

In den in Figur 2 dargestellten Ausführungsformen umfasst eine erfindungsgemäße Batterie wenigstens eine Messzelle, wobei die eine Messzelle eine Membran und zwei Kammern umfasst, und wobei wenigstens eine Kammer zur Aufnahme von Elektrolyt vorgesehen ist, und wobei die Messzelle wenigstens einen Anschluss für die Zufuhr von Elektrolyt und wenigstens einen Anschluss für die Abfuhr von Elektrolyt umfasst.

Damit eine Messeinrichtung 4 die aktuelle Elektrolyteigenschaft zuverlässig bestimmen kann, muss die Kammer bzw. müssen die Kammern mit frischem Elektrolyt versorgt werden. Dies geschieht dadurch dass die Messeinrichtung in den Elektrolyt-Kreislauf der Batterie eingebunden wird. Bei herkömmlichen Batterien werden die Anschlüsse für die Zufuhr und Abfuhr von Elektrolyt mit Punkten des Elektrolyt-Kreislaufes verbunden, welche eine solche Druckdifferenz aufweisen, dass die Kammern der Messeinrichtung 4 vom Elektrolyt durchströmt werden können. Geeignete Abzweigpunkte mit hohem Druck finden sich in den Leitungen, welche sich von der Druckseite der Pumpenlaufräder bis zur Zellanordnung erstrecken. Geeignete Abzweigpunkte mit niedrigem Druck finden sich in den Leitungen, welche sich von den Tanks bis zu der Saugseite der Pumpenlaufräder bzw. von der Zellanordnung bis zu den Tanks erstrecken. Niedriger Druck herrscht ferner im oberen Teil der Tanks selbst, so dass die Anschlüsse für die Abfuhr von Elektrolyt der Messeinrichtung 4 auch mit diesem Teil der Tanks verbunden sein können. In herkömmlichen Batterien kommt die letztgenannte Möglichkeit in der Regel zum Einsatz. Aus dem Gesagten ist klar, dass bei herkömmlichen Batterien zur Versorgung der Messzellen mit Elektrolyt einige Leitungen und Verzweigungsteile benötigt werden, was die Batterie komplex macht, und was dadurch das Risiko für eine Elektrolytleckage erhöht.

Die Erfinder haben sich daher die Aufgabe gestellt, die Anbindung der Messeinrichtung an den Elektrolytkreislauf so zu gestalten, dass die genannten Nachteile vermieden werden.

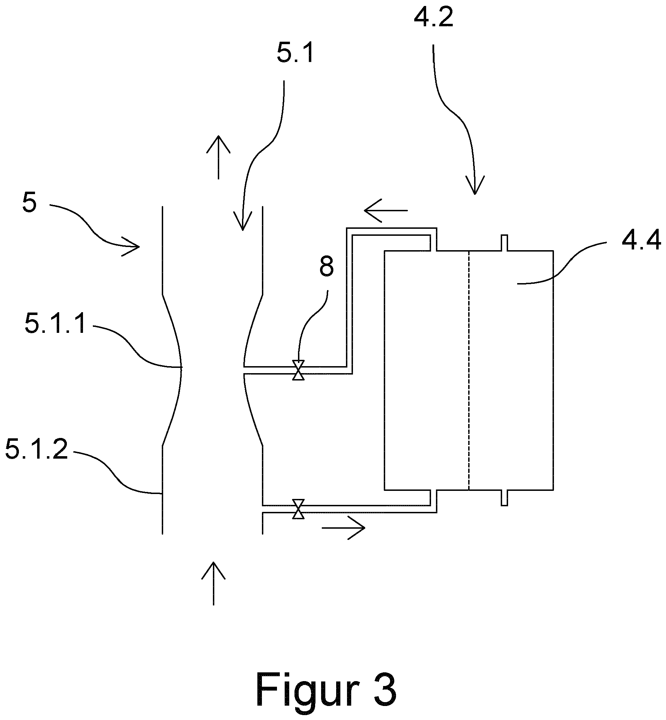

Figur 3 zeigt in schematischer Darstellung den prinzipiellen Aufbau einer erfindungsgemäßen Messeinrichtung am Beispiel einer Referenzzelle 4.2 mit geschlossener Referenzkammer 4.4. Dabei sind die Elektroden der Übersichtlichkeit halber nicht dargestellt. Neben der Referenzzelle 4.2 umfasst die erfindungsgemäße Messzelle ein Anschlusselement, welches mit 5 bezeichnet ist. Das Anschlusselement 5 umfasst einen Kanal, welcher mit 5.1 bezeichnet ist. Der Kanal 5.1 umfasst einen ersten Abschnitt, welcher mit 5.1.1 bezeichnet ist, und einen zweiten Abschnitt, welcher mit 5.1.2 bezeichnet ist. Dabei ist der Querschnitt des ersten Abschnitts 5.1.1 kleiner als der Querschnitt des zweiten Abschnitts 5.1.2. Der Anschluss für die Abfuhr von Elektrolyt der Referenzzelle 4.2 ist mit dem ersten Abschnitt 5.1.1 verbunden. Der Anschluss für die Zufuhr von Elektrolyt der Referenzzelle 4.2 ist mit dem zweiten Abschnitt 5.1.2 verbunden. Das Anschlusselement 5 ist so mit dem Elektrolytkreislauf verbunden, dass bei einer Zirkulation des Elektrolyten im Elektrolytkreislauf derselbe durch den Kanal 5.1 fließt. In Figur 3 ist dieser Elektrolytfluss durch die vertikalen Pfeile angedeutet. Aufgrund des Bernoulli-Effekts entsteht dadurch im ersten Abschnitt 5.1.1 ein Druck, welcher niedriger ist als der Druck, welcher im zweiten Abschnitt 5.1.2 vorliegt. Dadurch ergibt sich ein Elektrolytfluss durch die linke Kammer der Referenzzelle 4.2, welcher durch die horizontalen Pfeile angedeutet wird. Die erfindungsgemäße Anordnung ermöglicht eine Integration der Messzelle an einer beliebigen Stelle des Elektrolytkreislaufs, da die Anordnung das für den Elektrolytfluss durch die entsprechende Kammer der Messzelle notwendige Druckgefälle selbst erzeugt. Es ist noch anzumerken, dass die Fließrichtung durch die Kammer unabhängig von der Fließrichtung im Kanal 5.1 ist, d.h. in Bezug auf Figur 3, dass bei einer Umkehrung der vertikalen Pfeile die Richtung der horizontalen Pfeile unverändert bleibt.

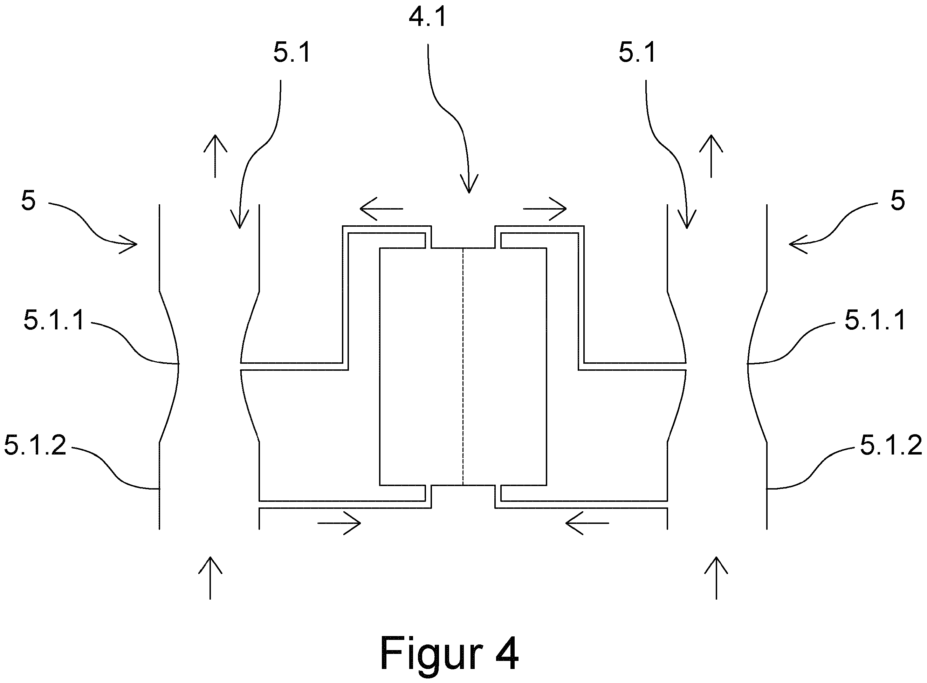

Figur 4 zeigt in schematischer Darstellung den prinzipiellen Aufbau einer erfindungsgemäßen Messeinrichtung am Beispiel einer OCV-Zelle 4.1. Da beide Kammern der OCV-Zelle von Elektrolyt durchströmt werden müssen, umfasst die erfindungsgemäße Messzelle gemäß Figur 4 ein weiteres Anschlusselement 5, welches analog zum in Figur 3 beschriebenen Anschlusselement 5 aufgebaut, angeordnet und mit der rechten Kammer der OCV-Zelle 4.1 verbunden ist.

Optional können eine oder mehrere oder alle Verbindungsleitungen zwischen den Kammern und den ersten und zweiten Abschnitten 5.1.1 und 5.1.2 des Kanals 5.1 Absperrventile enthalten. Figur 3 zeigt solche Absperrventile, von denen eines mit 8 bezeichnet ist. Mit Hilfe dieser Ventile kann der Elektrolytfluss durch die entsprechenden Kammern unterbunden werden. Dies kann von Vorteil sein, um nur dann einen Elektrolytfluss durch die Kammern zu erlauben, wenn Messwerte von der betreffenden Messzelle benötigt werden. So kann der "crossover" in der Referenzzelle minimiert werden.

Eine erfindungsgemäße Batterie kann folgende Kombinationen von Messzellen umfassen:
- Eine Referenzzelle
- Eine OCV-Zelle
- Eine OCV-Zelle und eine Referenzzelle
- Zwei Referenzzellen, welche eine OCV-Messeinrichtung bilden
- Eine OCV-Zelle und zwei Referenzzelle

Dazu können weitere Messzellen kommen, die redundant ausgebildet sind. In jedem Falls stellt sich der erfindungsgemäße Vorteil schon dann ein, wenn nur eine der vorhanden Referenzzellen gemäß Figur 3, oder wenn nur eine der Seiten einer vorhandenen OCV-Zelle gemäß Figur 4 aufgebaut ist. Der erfindungsgemäße Vorteil ist natürlich dann am höchsten, wenn alle vorhandenen Messzellen gemäß den Figuren 3 oder 4 aufgebaut sind.

In den Figuren 3 und 4 ist die Kontur der Einschnürung im Kanal 5.1 jeweils symmetrisch bzgl. der schmalsten Stelle dargestellt. Diese Kontur kann auch asymmetrisch verlaufen, z.B. indem in der Flussrichtung des Elektrolyten betrachtet sich der Kanal auf einer Strecke verengt, welche kürzer als die Strecke ist, auf der sich der Kanal nach der engsten Stelle wieder erweitert. Wenn diese sogenannte Beruhigungsstrecke nach der engten Stelle des Kanals lang genug gewählt wird, dann kann der durch die Einschnürung verursachte Druckverlust sehr gering gehalten werden, so dass die damit verbundenen Verluste ebenfalls sehr gering werden.

Besonders vorteilhaft ist es, wenn die jeweiligen erfindungsgemäß aufgebauten Messzellen samt Anschlusselement bzw. Anschlusselementen eine bauliche Einheit bilden, so dass die Kammern, die Membran bzw. die Membranen, der oder die Kanäle und die Verbindungsleitungen zwischen den Kammern und den Kanälen in diese eine bauliche Einheit eingebettet sind. Diese bauliche Einheit kann beispielsweise in Spritzgusstechnik hergestellt werden, wobei die bauliche Einheit vorzugsweise aus Kunststoff besteht. Eine weitere Herstellungsmöglichkeit besteht darin, dass die genannte bauliche Einheit zwei oder mehrere Bauteilen aus Kunststoff umfasst, in welchen die Kammern, Kanäle und Verbindungsleitungen mittels entsprechenden Aussparungen eingebettet sind. Die Kammern, Kanäle und Verbindungsleitungen werden dann durch Zusammenfügen der Bauteile gebildet. Die Aussparungen können beispielsweise durch Fräsen erzeugt werden. Das Zusammenfügen kann dabei durch Verschrauben, Kleben oder Verschweißen erfolgen. Beim Verschrauben sind ggf. Dichtungen vorzusehen. Besonders vorteilhaft kann die mehrteilige Anordnung ausgebildet werden, wenn die eine Kammer der Messzelle in einem der Bauteile vorgesehen wird, und die andere Kammer der Messzelle in einem anderen Bauteil, so dass die Membran zwischen diesen beiden Bauteilen eingeklemmt wird. Ggf. sind an der Klemmstelle Dichtungen vorzusehen. Alternativ kann die bauliche Einheit auch durch ein additives Fertigungsverfahren hergestellt werden. Selbstverständlich können die genannten Herstellungsmethoden auch kombiniert werden, z.B. indem ein Teil der Bauteile in Gusstechnik hergestellt, und ein anderer Teil der Bauteile durch Fräsen erzeugt wird.

In die bauliche Einheit können vorteilhaft Sensoren integriert sein. Dabei kann es sich beispielsweise um Druck- oder Temperatursensoren handeln. Temperatursensoren sind von besonderer Wichtigkeit, da die Temperatur einen wesentlichen Einfluss auf das aus der Nernst Gleichung ermittelte Potential hat.

Zum Anschluss des Anschlusselementes oder der Anschlusselemente an den Elektrolytkreislauf können Flansche oder Anschlussstutzen vorgesehen sein. Diese können vorteilhaft in die bauliche Einheit integriert sein.

Eine weitere vorteilhafte Ausführungsform ergibt sich, wenn die Anordnung aus Verbindungsleitungen samt OCV-Zelle selbstentlüftend konstruiert wird. Z.B. kann man die Verbindungsleitungen in Flussrichtung des Elektrolyten monoton ansteigend ausbilden und/oder durch geeignete Geometrien der OCV-Zelle. Dies erleichtert die automatische Entlüftung der Messzellen.

Eine besonders vorteilhafte Ausführungsform ergibt sich, wenn in die bauliche Einheit neben dem Kanal, den Kammern und den Zuleitungen auch noch eines oder beide der Pumpenlaufräder der Batterie integriert werden. Dadurch entfallen weitere Anschlussstücke im Elektrolytkreislauf, so dass die Komplexität und die Anfälligkeit gegen Leckagen weiter reduziert werden kann. Dabei kann der Kanal mit Verengung entweder auf der Druck- oder auf der Saugseite des Pumpenlaufrades vorgesehen sein. In dieser Ausführungsform stellt die bauliche Einheit sozusagen einen vergrößerten Pumpenkopf dar, in welchen die Messzelle, das Anschlusselement bzw. die Anschlusselemente und die Verbindungsleitungen integriert sind. Bezüglich der Herstellung dieser Ausführungsform gilt das oben Gesagte.

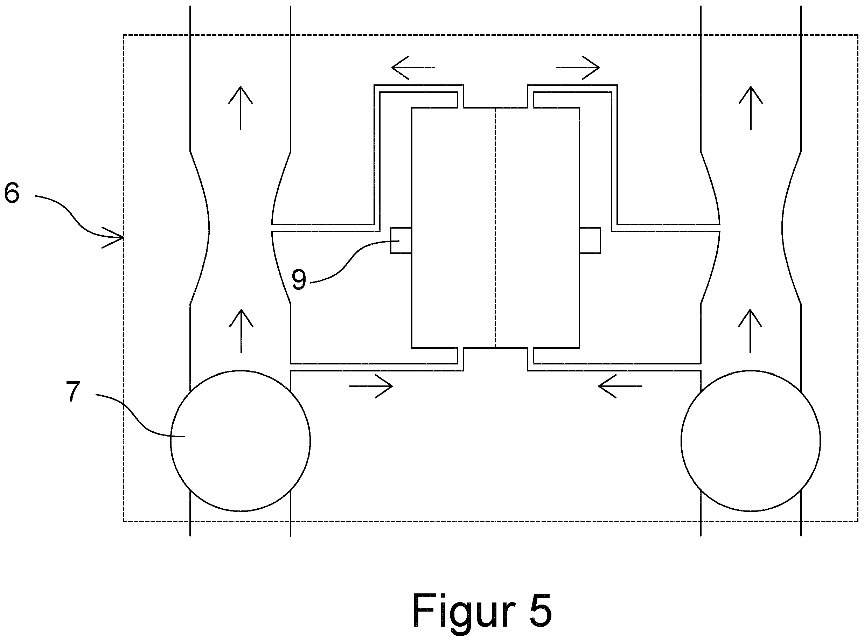

Figur 5 zeigt eine solche Ausführungsform in schematischer Darstellung, wobei das gestrichelte Rechteck, welches mit 6 bezeichnet ist, die bauliche Einheit darstellt. Die Pumpenlaufräder sind durch die Kreise angedeutet, von denen einer mit 7 bezeichnet ist. Die Pumpenlaufräder können vorteilhaft so ausgebildet sein, dass dieselben von einem gemeinsamen Motor angetrieben werden können. Außerdem zeigt Figur 5 zwei in die bauliche Einheit 6 integrierte Temperatursensoren, von denen einer mit 9 bezeichnet ist. Die Temperatursensoren 9 sind vorteilhat so angeordnet, dass dieselben einen guten thermischen Kontakt zum in der Messzelle befindlichen Elektrolyten habe. Das ist z.B. dann der Fall, wenn die Sensoren so angeordnet sind, dass sie sich in unmittelbarer Nähe der elektrischen Zuleitungen befinden, welche in die Messzelle hineinführen.

### Bezugszeichenliste

- 1: Redox-Flow Batterie
- 2: Zellanordnung
- 3: Tankeinrichtung
- 4: Messeinrichtung zur Bestimmung einer Elektrolyteigenschaft
- 4.1: Messzelle / OCV-Zelle
- 4.2: Messzelle / Referenzzelle
- 4.3: Messzelle / Referenzzelle
- 4.4: Referenzflüssigkeit
- 5: Anschlusselement
- 5.1: Kanal
- 5.1.1: Erster Abschnitt des Kanals
- 5.1.2: Zweiter Abschnitt des Kanals
- 6: Bauliche Einheit
- 7: Pumpenlaufrad
- 8: Absperrventil
- 9: Temperatursensor

## Patentansprüche

1. Redox-Flow Batterie (1) umfassend eine Zellanordnung (2) und eine Tankeinrichtung (3) zur Aufnahme von Elektrolyt, wobei die Zellanordnung (2) eine Vielzahl von Redox-Flow-Zellen, und die Tankeinrichtung (3) wenigstens einen ersten Tank zur Aufnahme von negativen Elektrolyten, wenigstens einen zweiten Tank zur Aufnahme von positiven Elektrolyten, ein Rohrsystem zur Verbindung der Tanks mit der Zellanordnung (2) und Pumpenlaufräder (7) zum Fördern des Elektrolyten umfasst, um jeweils einen Elektrolytkreislauf zu bilden, und wobei die Redox-Flow Batterie (1) wenigstens eine Messeinrichtung (4) zur Bestimmung einer Elektrolyteigenschaft mit wenigstens einer Messzelle (4.1, 4.2, 4.3) umfasst, wobei die wenigstens eine Messzelle (4.1, 4.2, 4.3) wenigstens einen Anschluss für die Zufuhr von Elektrolyt, wenigstens einen Anschluss für die Abfuhr von Elektrolyt und ein Anschlusselement (5) mit einem Kanal (5.1) umfasst, welches so mit einem der Elektrolytkreisläufe verbunden ist, dass bei einer Zirkulation des Elektrolyten im Elektrolytkreislauf Elektrolyt durch den Kanal (5.1) fließt, **dadurch gekennzeichnet, dass** der Kanal (5.1) einen ersten Abschnitt (5.1.1) und einen zweiten Abschnitt (5.1.2) umfasst, wobei der Querschnitt des ersten Abschnitts (5.1.1) kleiner als der Querschnitt des zweiten Abschnitts (5.1.2) ist, und wobei der Anschluss für die Abfuhr von Elektrolyt mit dem ersten Abschnitt (5.1.1) durch eine Verbindungsleitung und der Anschluss für die Zufuhr von Elektrolyt mit dem zweiten Abschnitt (5.1.2) durch eine Verbindungsleitung verbunden ist.

2. Redox-Flow Batterie (1) gemäß Anspruch 1, wobei die wenigstens eine Messzelle (4.2, 4.3) als Referenzzelle ausgebildet ist.

3. Redox-Flow Batterie (1) gemäß Anspruch 1, wobei die wenigstens eine Messzelle (4.2, 4.3) als OCV-Zelle ausgebildet ist.

4. Redox-Flow Batterie (1) gemäß Anspruch 2, wobei die Referenzzelle (4.2, 4.3) zwei Kammern umfasst, und eine der Kammern mit einer Referenzflüssigkeit gefüllt ist, welche als gelled electrolyte ausgebildet ist.

5. Redox-Flow Batterie (1) gemäß Anspruch 2, wobei die Referenzzelle (4.2, 4.3) zwei Kammern umfasst, und in einer der Kammern ein Platindraht angeordnet ist.

6. Redox-Flow Batterie (1) gemäß Anspruch 2, wobei die Bestimmung der Elektrolyteigenschaft mit Hilfe einer optischen spektroskopischen Messung erfolgt.

7. Redox-Flow Batterie (1) gemäß einem der vorangehenden Ansprüche, wobei wenigstens in einer Verbindungsleitung ein Absperrventil (8) angeordnet ist.

8. Redox-Flow Batterie (1) gemäß einem der vorangehenden Ansprüche, wobei in der Flussrichtung des Elektrolyten betrachtet der Kanal (5.1) sich auf einer Strecke verengt, welche kürzer als eine Strecke ist, auf der sich der Kanal erweitert.

9. Redox-Flow Batterie (1) gemäß einem der vorangehenden Ansprüche, wobei die Verbindungsleitungen in Flussrichtung des Elektrolyten monoton ansteigend ausgebildet sind.

10. Redox-Flow Batterie (1) gemäß einem der vorangehenden Ansprüche, wobei die wenigstens eine Messeinrichtung (4) als eine bauliche Einheit (6) ausgeführt ist, so dass die wenigstens eine Messzelle (4.1, 4.2, 4.3), der Kanal (5.1) und die Verbindungsleitungen zwischen der wenigstens eine Messzelle (4.1, 4.2, 4.3) und dem Kanal (5.1) in die bauliche Einheit (6) eingebettet sind.

11. Redox-Flow Batterie (1) gemäß Anspruch 10, wobei in die bauliche Einheit (6) wenigstens ein Pumpenlaufrad (7) eingebettet ist.

12. Redox-Flow Batterie (1) gemäß Anspruch 10 oder 11, wobei in die bauliche Einheit (6) wenigstens ein Temperatursensor (9) eingebettet ist.

## Claims

1. A redox flow battery (1) comprising a cell arrangement (2) and a tank facility (3) for receiving electrolyte, wherein the cell arrangement (2) comprises a plurality of redox flow cells, and the tank facility (3) comprises at least one first tank for receiving negative electrolyte, at least one second tank for receiving positive electrolyte, and a piping system for connecting the tanks to the cell arrangement (2) and pump impellers (7) for conveying the electrolyte in order to form an electrolyte circuit in each case, and wherein the redox flow battery (1) comprises at least one measuring device (4) for determining an electrolyte property with at least one measuring cell (4.1, 4.2, 4.3), wherein the at least one measuring cell (4.1, 4.2, 4.3) comprises at least one connection for the feeding of electrolyte, at least one connection for the removal of electrolyte and a connection element (5) with a channel (5.1), which is connected to one of the electrolyte circuits in such a way that electrolyte flows through the channel (5.1) when the electrolyte is circulating in the electrolyte circuit, **characterized in that** the channel (5.1) comprises a first section (5.1.1) and a second section (5.1.2), wherein the cross section of the first section (5.1.1) is smaller than the cross section of the second section (5.1.2), and wherein the connection for the removal of electrolyte is connected to the first section (5.1.1) by an interconnection and the connection for the feeding of electrolyte is connected to the second section (5.1.2) by an interconnection.

2. Redox flow battery (1) according to claim 1, wherein the at least one measuring cell (4.2, 4.3) is designed as a reference cell.

3. Redox flow battery (1) according to claim 1, wherein the at least one measuring cell (4.2, 4.3) is designed as an OCV cell.

4. Redox flow battery (1) according to claim 2, wherein the reference cell (4.2, 4.3) comprises two chambers, and one of the chambers is filled with a reference liquid which is formed as a gelled electrolyte.

5. A redox flow battery (1) according to claim 2, wherein the reference cell (4.2, 4.3) comprises two chambers, and a platinum wire is arranged in one of the chambers.

6. Redox flow battery (1) according to claim 2, wherein the electrolyte property is determined by means of an optical spectroscopic measurement.

7. Redox flow battery (1) according to one of the preceding claims, wherein a shut-off valve (8) is arranged at least in one interconnection.

8. A redox flow battery (1) according to any one of the preceding claims, wherein, viewed in the flow direction of the electrolyte, the channel (5.1) narrows over a distance shorter than a distance over which the channel widens.

9. Redox flow battery (1) according to one of the preceding claims, wherein the interconnections are designed to rise monotonically in the direction of flow of the electrolyte.

10. Redox flow battery (1) according to one of the preceding claims, wherein the at least one measuring device (4) is designed as a physical unit (6), so that the at least one measuring cell (4.1, 4.2, 4.3), the channel (5.1) and the interconnections between the at least one measuring cell (4.1, 4.2, 4.3) and the channel (5.1) are embedded in the physical unit (6).

11. Redox flow battery (1) according to claim 10, wherein at least one pump impeller (7) is embedded in the physical unit (6).

12. Redox flow battery (1) according to claim 10 or 11, wherein at least one temperature sensor (9) is embedded in the physical unit (6).

## Revendications

1. Batterie à flux redox (1) comprenant une disposition des cellules (2) et un dispositif de réservoir (3) pour contenir de l'électrolyte, la disposition des cellules (2) comprenant une pluralité de cellules à flux redox, et le dispositif de réservoir (3) comprenant au moins un premier réservoir pour contenir de l'électrolyte négatif, au moins un second réservoir pour contenir de l'électrolyte positif, un système de tuyaux pour relier les réservoirs à la disposition des cellules (2) et des roues de pompe (7) pour transporter l'électrolyte afin de former respectivement un circuit d'électrolyte, et dans lequel la batterie à flux redox (1) comprend au moins un dispositif de mesure (4) pour déterminer une propriété électrolytique avec au moins une cellule de mesure (4.1, 4.2, 4.3), l'au moins une cellule de mesure (4.1, 4.2, 4.3) comprend au moins un raccordement pour l'alimentation en électrolyte, au moins un raccordement pour la collecte d'électrolyte et un élément de raccordement (5) avec un canal (5.1) qui est relié à l'un des circuits d'électrolytes de telle sorte que, lors d'une circulation de l'électrolyte dans le circuit d'électrolytes, l'électrolyte s'écoule à travers le canal (5.1), **caractérisé en ce que** le canal (5.1) comprend une première section (5.1.1) et une deuxième section (5.1.2), la section de la première section (5.1.1) étant plus petite que la section de la deuxième section (5.1.2), et le raccordement pour la collecte de l'électrolyte étant relié à la première section (5.1.1) par une ligne de jonction et le raccordement pour l'alimentation de l'électrolyte étant relié à la deuxième section (5.1.2) par une ligne de jonction.

2. Batterie à flux redox (1) selon la revendication 1, dans laquelle l'au moins une cellule de mesure (4.2, 4.3) est conçue comme cellule de référence.

3. Batterie à flux redox (1) selon la revendication 1, dans laquelle l'au moins une cellule de mesure (4.2, 4.3) est conçue comme une cellule OCV.

4. Batterie à flux redox (1) selon la revendication 2, dans laquelle la cellule de référence (4.2, 4.3) comprend deux chambres, et l'une des chambres est remplie d'un liquide de référence qui est conçu comme un électrolyte gelé.

5. Batterie à flux redox (1) selon la revendication 2, dans laquelle la cellule de référence (4.2, 4.3) comprend deux chambres, et un fil de platine est disposé dans l'une des chambres.

6. Batterie à flux redox (1) selon la revendication 2, dans laquelle la détermination des propriétés électrolytiques est effectuée à l'aide d'une mesure spectroscopique optique.

7. Batterie à flux redox (1) selon l'une quelconque des revendications précédentes, dans laquelle une vanne d'arrêt (8) est disposée dans au moins une ligne de jonction.

8. Batterie à flux redox (1) selon l'une quelconque des revendications précédentes, dans laquelle, vu dans le sens d'écoulement de l'électrolyte, le canal (5.1) se rétrécit sur une distance plus courte qu'une distance sur laquelle le canal s'élargit.

9. Batterie à flux redox (1) selon l'une quelconque des revendications précédentes, dans laquelle les lignes de jonction sont réalisées avec une pente ascendante monotone dans le sens d'écoulement de l'électrolyte.

10. Batterie à flux redox (1) selon l'une quelconque des revendications précédentes, dans laquelle ledit au moins un dispositif de mesure (4) est réalisé sous la forme d'une unité de construction (6), de sorte que ladite au moins une cellule de mesure (4.1, 4.2, 4.3), ledit canal (5.1) et les lignes de jonction entre ladite au moins une cellule de mesure (4.1, 4.2, 4.3) et ledit canal (5.1) sont incorporés dans ladite unité de construction (6).

11. Batterie à flux redox (1) selon la revendication 10, dans laquelle au moins une roue de pompe (7) est incorporée dans l'unité de construction (6).

12. Batterie à flux redox (1) selon la revendication 10 ou 11, dans laquelle au moins un capteur de température (9) est incorporé dans l'unité de construction (6).
